# EUROPEAN PATENT SPECIFICATION

(11) **EP 3 144 576 B1**
(45) Date of publication and mention of the grant of the patent: **21.08.2019**
(21) Application number: 16174741.5
(22) Date of filing: 16.06.2016
(51) Int. Cl.: F16N 29/02, B27L 7/00

(54) **A MECHANISM FOR AUTOMATIC LUBRICATION OF GUIDES IN A LOG SPLITTER**
MECHANISMUS FÜR AUTOMATISCHE SCHMIERUNG FÜR HOLZSPALTER
MÉCANISME DE LUBRIFICATION AUTOMATIQUE DE POUR FENDEUSE A BOIS

(30) Priority: 21.08.2015 SI 201500193
(43) Date of publication of application: 22.03.2017
(73) Proprietor: Pisek - Vitli Krpan, d.o.o., 3240 Smarje pri Jelsah (SI)
(72) Inventor: Pisek, Franc, 3240 Smarje pri Jelsah (SI)
(74) Representative: Flak, Antonija

(56) References cited:
- EP-A2- 0 806 271
- CN-U- 204 149 284
- US-A- 3 077 214
- US-A- 4 262 714
- US-A- 4 366 847

## Description

### Field of the invention

The present invention belongs to the field of manufacturing processes, more precisely to the field of log splitters for cutting logs into smaller pieces.

### The technical problem

When a log splitter is operating its pushing piston moves backwards and forwards on the guides at each splitting of a log. By doing so, the guides usually receive various types of dirt and are exposed to great wear after long operation, especially when conditions include high moisture. This negative effect could be reduced if the guides were slightly lubricated at all times, so that the pushing piston would slide more easily. In addition, oil lubrication is required only when a log splitter is operating. The best option is that lubrication of guides is automatically triggered when the machine start to push logs towards the splitting blade and is automatically turned off when the machine is not operating.

The technical problem, which is solved by the present invention, is construction of a mechanism for a log splitter that will enable automatic opening and closing of a valve with oil depending on the position of the pushing piston in a log splitter.

### State of the art

Vertical and horizontal log splitters exist on the market, which are similar to each other and differ in additional functional elements. In horizontal log splitters the guides for logs are made as the final part of the feeding system. Documents describing constructional characteristics of log splitters exist in patent literature, but systems for constructional characteristics of log splitters exist in patent literature, for example documents US4262714 and CN 204149284.

Document US4262714 discloses a log splitting attachment for tractor three point hitch members. The device includes a top hitch connector member that is releasably mountable to the single tractor top hitch member. A cross connector member is adapted to mount between the two tractor bottom hitch members. A splitting blade is mounted on one of the connector members and a log support surface is located on the remaining member. A guide mechanism is also provided for movably joining the two connector members for guiding relative movement of the wood support surface in a line toward and away from the cutting blade. Actuation of a conventional rocker shaft on the tractor to cause upward movement of the bottom hitch member will cause corresponding movement of the cross member toward the top connector member, thereby causing the wood support and the blade to move toward one another. Wood held on the support surface is brought against the blade and is split as the support and blade move toward one another.

Document CN204149284 discloses a full-automatic firewood splitting machine. The machine comprises a girder machine body, a draw bar assembly, a vertical knife small oil cylinder, a firewood support platform, a main oil cylinder, an auxiliary knife, a firewood loader, a fuel engine, a secondary pump, a three-piece valve and wheels, wherein the girder machine body is connected and fixed above a fuel tank through connecting pieces; the draw bar assembly, the vertical knife small oil cylinder and the firewood support platform are connected and fixed at the bottom of the back end of the girder machine body through hanging pieces; the main oil cylinder is hinged to the front end of the girder machine body through a connecting shaft; the auxiliary knife is connected with the main knife in a sleeve manner and connected with a piston rod of the vertical knife small oil cylinder; the main knife is welded at the back end of the girder machine body, and the firewood loader is connected onto the girder machine body through a hinge; the fuel engine is mounted on a support seat on one side surface of the girder machine body, and a power output shaft of the fuel engine is coaxially connected with the secondary pump through a coupling I. The machine is high in working efficiency, good in firewood splitting quality, more convenient to operate and capable of packing split firewood automatically; and the labor intensity of operators is low.

However, both mentioned and other similar log splitting machines do not include systems for lubrication of guides. Such systems are also not mentioned in user manuals for operation of log splitters made by different manufacturers.

### Description of the solution of the technical problem

The essence of the mechanism for automatic lubrication of guides in a log splitter is in that switching lubrication on or off depends on the position of the piston of a hydraulic cylinder with an inclined plate and a lever with a wheel, which switches an oil valve from the closed state to the open state. A reservoir for lubrication oil and with a lever controlled valve are installed on a pushing head, wherein the valve turns on, when the pushing head starts to move from its starting position, and wherein the valve turns off, when the pushing head returns to its starting position. The lever has a freely rotating wheel, which in the starting position of the pushing head anchors an inclined plate on the lower side of the hydraulic cylinder and holds the valve in the closed position. When the log splitter is in use, the piston rod together with the pushing head moves away from the inclined plate under the hydraulic cylinder and the lever lifts due to a pre-tensioned spring, which consequently results in opening of the valve with oil, which then freely runs from the reservoir to two lubrication nozzles and oil drips to the surface of the guides.

The mechanism for automatic lubrication of guides in a log splitter will be further described in detail based on figures, which show:
- Figure 1: a horizontal log splitter,

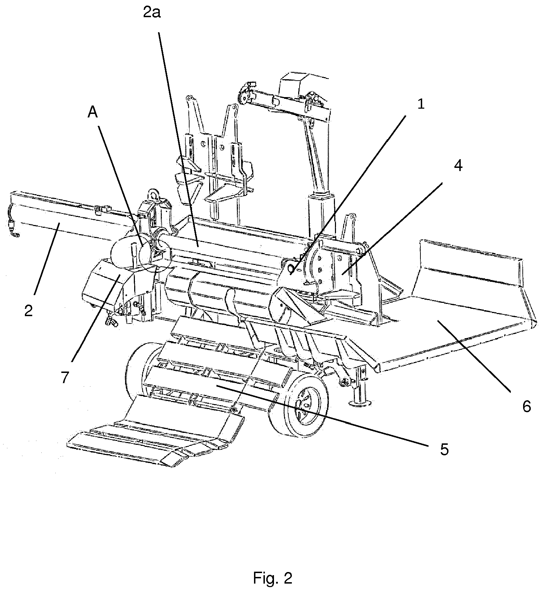

- Figure 2: a horizontal log splitter,

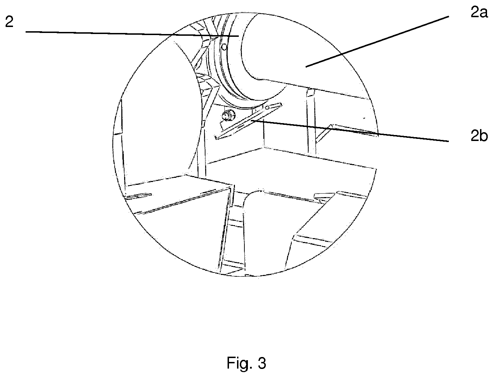

- Figure 3: detail A,
- Figure 4: a pushing head 1,
- Figure 5: a plan view of the pushing head 1.

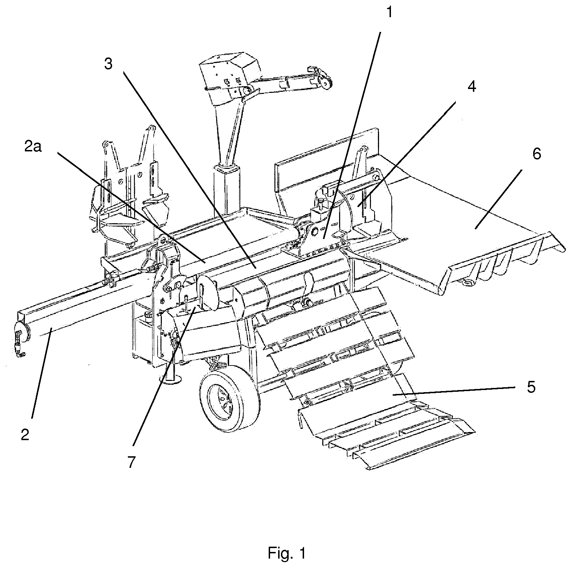

As shown in figure 1, the horizontal log splitter has a pushing head 1, which is pushed by a hydraulic cylinder 2 along the longitudinal axis of guides 3 towards a blade 4. When the machine is operating, a log, which is usually 1 meter long, rolls along a feeder and stops on the guides 3. When the hydraulic cylinder 2 is activated, a piston rod 2a starts to move together with the pushing head 1 towards a blade 4, which cuts the log to a specified number of pieces, which is the same as the number of knives on the blade 4. The number of knives may be 4, 6 or more. After the cutting is finished, the piston rod 2a returns to its starting position. Pieces of the log stay on a stowage table 6 or roll to a movable conveyor belt. The log splitter is controlled from a control board and includes an electro-hydraulic drive.

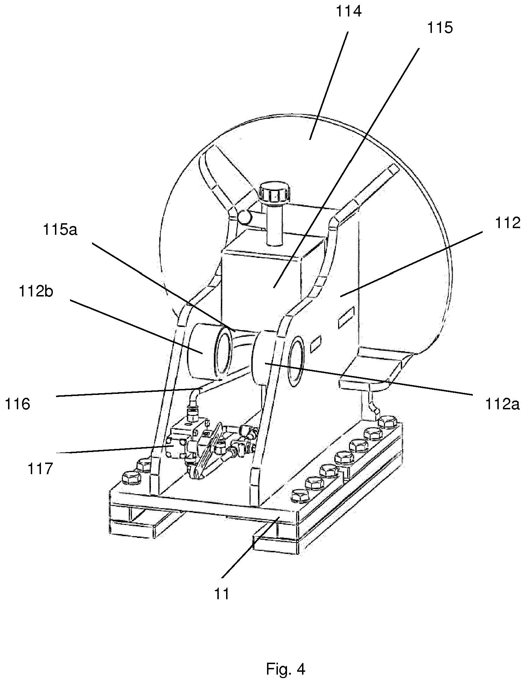

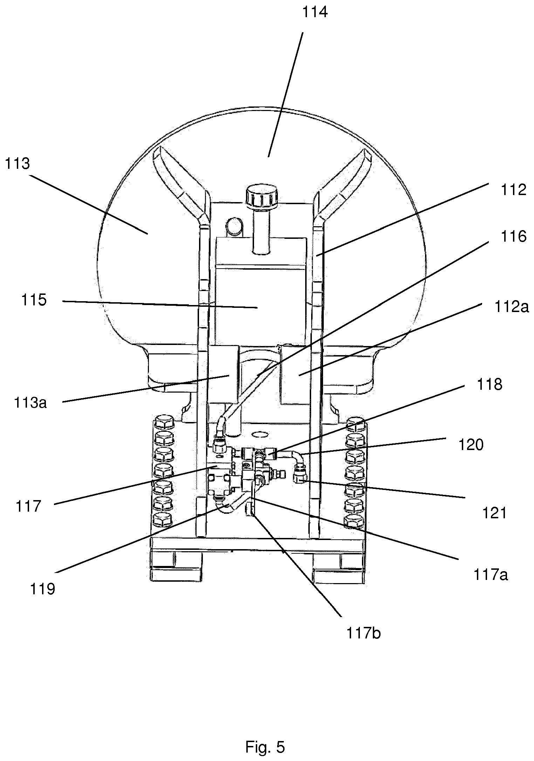

The pushing head 1 is installed to the guides 3 via a horizontal base 11, which is held from the bottom side by parts 11a and 11b. The guides 3 are designed as a T-shaped profile, so that the pushing head 1 can reliably and safely move along the guides 3. Lateral sides 112 and 113 are weld perpendicularly to the base 11, the sides also being weld to a circularly shaped pushing plate 114. Bushes 112a and 113a are welded on sides 112 and 113 in parallel with the base 11. The base 11 has openings in the place of lubrication nozzles, so that oil can run on the guides 3. Bushes 112a and 113a are welded with an accessory 115a, which is on the other side welded on the plate 114. An oil reservoir 115 is mounted on the accessory 115a between the sides 112 and 113 and the pushing plate 114 as shown in figures 4 and 5. The piston rod 2a of the hydraulic cylinder 2 is mounted in the bushes 112a and 113a. Under the accessory 115a and bushes 112a and 113a an inlet tube 116 and the valve 117 with the lever 117a and the wheel 117b extends from the reservoir 115. An inlet tube 119 is connected to the valve 117, wherein the tube is attached to the entrance of a T-shaped piece 118. To the output of the T-shaped piece 118 two tubes 120 are connected, which are together with nozzles 121 attached into a hole on the left and on the right side of the upper plate of the base 11.

The mechanism for automatic lubrication of guides in a log splitter functions in such way that when lubrication is switched on, the piston rod 2a together with the pushing head 1 moves along the guides 3 and moves away from the inclined plate 2b on the hydraulic cylinder 2 and consequently the wheel 117b of the lever 117a slides on the plate 2b, sets in a new position and opens the valve 117 so that oil runs from the lubrication nozzles onto the guides 3. The lever 117a remains in this position until the wheel 177b of the lever 117a reaches the plate 2b, slides on it and remains in that position, which results in closing of the valve 117. For splitting of each log the movement of the pushing head 1 is repeated, which enables lubrication of the guides 3, when the pushing head 1 moves from the starting position to the final position at blade 4 and back to the starting position, when the piston rod 2a is in the cylinder 2. Switching lubrication of the guides 3 on or off depends on the position of the pushing head 1, the cylinder 2 with the plate 2b and the lever 117a with the wheel 117.

The mechanism for automatic lubrication of the guides in a log splitter may also be executed with a lever 117a, which has a pre-tensioned spring. The lever 117a may be equipped with a freely-rotating wheel 117b or may be without the wheel 117b.

The mechanism for automatic lubrication of the guides in a log splitter has an outlet tube attached to a valve 117, the tube being connected to the entrance of a distribution piece with three or more outlets, wherein the number of nozzles along the transverse side of the upper plate of the base 11 is the same as the number of outlets of the distribution piece. The mechanism may also be executed so that the outlet tube from the valve 117 is directly connected to the nozzle on the upper plate of the base 11.

The mechanism for automatic lubrication of the guides in a log splitter according to embodiment I is installed into vertical splitters, wherein the geometric placement of individual functional elements on the hydraulic cylinder and the valve with the lever has to be adapted.

The mechanism for automatic lubrication of the guides in a log splitter according to the invention enables mechanical opening and closing of the valve or lubrication nozzles, respectively, reliable operation, systematic lubrication of guides, decreased wear of guides, longer life span and lower maintenance costs. When the pushing head is in its starting position, lubrication is disabled so that oil does not drip from the log splitter to the ground.

## Claims

1. A log splitter with a mechanism for automatic lubrication of guides , wherein the log splitter includes an electro-hydraulic drive, a pushing head (1), a hydraulic cylinder (2), guides (3), a blade (4), a feeder (5), a stowage table (6) and a control board (7), **characterized in that,** switching lubrication on or off depends on the position of a piston of the hydraulic cylinder (2) with an inclined plate (2b) and a lever (117a) with a wheel (117b) which switches an oil valve (117) from the closed state to the open state.

2. The log splitter with the mechanism for automatic lubrication of guides according to claim 1, **characterized in that** a reservoir (115) for lubrication oil and a valve (117) controlled with a lever (117a) are installed on the pushing head (1), wherein the valve turns on when the pushing head starts to move from its starting position and wherein the valve turns off when the pushing head returns to its starting position; that the lever in the starting position of the pushing head anchors an inclined plate (2b) on the lower side of the hydraulic cylinder (2) and holds the valve in the closed position; that when the log splitter is in use, the piston rod (2a) together with the pushing head moves away from the inclined plate under the hydraulic cylinder and the lever lifts, which consequently results in opening of the valve with oil, which then freely runs from the reservoir to two lubrication nozzles and oil drips to the surface of the guides.

3. The log splitter with the mechanism for automatic lubrication of guides according to claim 2, **characterized in that** the pushing head (1) is installed to the guides (3) via a horizontal base (11), which is held from the bottom side by parts (11a) and (11b); that the guides (3) are designed as a T-shaped profile; that lateral sides (112) and (113) are weld perpendicularly to the base (11), the sides also being weld to a circularly shaped pushing plate (114); bushes (112a and 113a) are welded on the sides (112 and 113) in parallel with the base (11); the base (11) has openings in the place for lubrication nozzles (121), so that oil can run on the guides (3); the bushes (112a and 113a) are welded with an accessory (115a), which is on the other side welded on the plate (114); an oil reservoir (115) is mounted on the accessory (115a) between the sides (112 and 113) and the pushing plate (114); the piston rod (2a) of the hydraulic cylinder (2) is mounted in the bushes (112a and 113a); under the accessory (115a) and bushes (112a and 113a) an inlet tube (116) and a valve (117) with a lever (117a) and a wheel (117b) extends from the reservoir (115); an inlet tube (119) is connected to the valve (117), wherein the tube is attached to the entrance of a T-shaped piece (118); to the output of the T-shaped piece (118) two tubes (120) are connected, which are together with nozzles (121) attached into hole on the left and on the right side of the upper plate of the base (11).

4. The log splitter with the mechanism for automatic lubrication of guides according to any of the preceding claims, **characterized in that** the lever (117a) has a pre-tensioned spring.

5. The log splitter with the mechanism for automatic lubrication of guides according to any of the preceding claims, **characterized in that** a freely-rotating wheel (177b) is installed in the lever (117a).

6. The log splitter with the mechanism for automatic lubrication of guides according to any of the preceding claims, **characterized in that** when operation is switched on, the piston rod (2a) together with the pushing head (1) moves along the guides (3) and moves away from an inclined plate (2b) on the hydraulic cylinder (2) and consequently the wheel (117b) of the lever (117a) slides on the plate (2b), sets in a new position and opens the valve (117) so that oil runs from the lubrication nozzles onto the guides (3); that the lever (117a) remains in the said position until the wheel (177b) of the lever (117a) reaches the plate (2b), slides on it and remains **in that** position, which results in closing of the valve (117); that for each splitting of a log the movement of the pushing head (1) is repeated, which enables lubrication of the guides (3), when the pushing head (1) moves from the starting position to the final position at blade (4) and back to the starting position, when the piston rod (2a) is in the cylinder (2); that switching on or off of lubrication of the guides (3) depends on the position of the pushing head (1), the cylinder (2) with the plate (2b) and the lever (117a) with the wheel (117).

7. The log splitter with the mechanism for automatic lubrication of guides according to any of the preceding claims, **characterized in that** an outlet tube is attached to the valve (117), the tube being connected to the entrance of a distribution piece with three or more outlets, wherein the number of nozzles along the transverse side of the upper plate of the base (11) is the same as the number of outlets of the distribution piece.

8. The log splitter with the mechanism for automatic lubrication of guides according to any of the preceding claims, **characterized in that** the outlet tube from the valve (117) is directly connected to the nozzle on the upper plate of the base (11).

9. The log splitter with the mechanism for automatic lubrication of guides according to any of the preceding claims, **characterized in that** it is installed into vertical splitters, wherein the geometric placement of individual functional elements on the hydraulic cylinder and the valve with the lever is adjusted so that switching on and off is working.

## Patentansprüche

1. Holzspalter mit einem Mechanismus zur automatischen Schmierung der Führungen, wobei der Holzspalter einen elektro-hydraulischen Antrieb, einen Schubkopf (1), einen Hydraulikzylinder (2), Führungen (3), eine Schaufel (4), einen Beschicker (5), einen Stautisch (6) und eine Steuerplatine (7) umfasst, **dadurch gekennzeichnet, dass** die Ein- oder Ausschaltung der Schmierung von der Position eines Kolbens des Hydraulikzylinders (2) mit einer Schrägscheibe (2b) und einem Hebel (117a) mit einem Rad (117b), das ein Ölventil (117) vom geschlossenen in den geöffneten Zustand schaltet, abhängt.

2. Holzspalter mit einem Mechanismus zur automatischen Schmierung von Führungen nach Anspruch 1, **dadurch gekennzeichnet, dass** ein Reservoir (115) für Schmieröl und ein durch einen Hebel (117a) gesteuertes Ventil (117) auf dem Schubkopf (1) montiert sind, wobei das Ventil einschaltet, wenn sich der Schubkopf aus seiner Ausgangsstellung zu bewegen beginnt, und wobei das Ventil ausschaltet, wenn der Schubkopf in seine Ausgangsstellung zurückkehrt; dass der Hebel in der Ausgangsstellung des Schubkopfes eine Schrägscheibe (2b) an der Unterseite des Hydraulikzylinders (2) verankert und das Ventil in der Schließstellung hält; dass sich, während der Benutzung des Holzspalters die Kolbenstange (2a) zusammen mit dem Schubkopf unter dem Hydraulikzylinder von der Schrägscheibe weg bewegt und der Hebel abhebt, was zur Öffnung des Ölventils führt, und das Öl dann aus dem Reservoir zu zwei Schmierdüsen fließt und die Oberfläche der Führungen betropft.

3. Holzspalter mit einem Mechanismus zur automatischen Schmierung von Führungen nach Anspruch 2, **dadurch gekennzeichnet, dass** der Schubkopf (1) über einen horizontalen Boden (11), der von der Unterseite durch die Teile (11a) und (11b) gehalten wird, an den Führungen (3) angebracht ist; dass die Führungen (3) wie ein T-Profil ausgebildet sind; dass die Flankenseiten (112) und (113) senkrecht zum Boden (11) verschweißt sind, wobei die Seiten auch mit einer kreisförmig ausgebildeten Schubplatte (114) verschweißt sind; Buchsen (112a und 113a) werden an den Seiten (112 und 113) parallel zum Boden (11) angeschweißt; der Boden (11) weist Öffnungen an der Stelle für die Schmierdüsen (121) auf, so dass Öl auf die Führungen (3) fließen kann; die Buchsen (112a und 113a) sind mit einem Zubehörteil (115a) verschweißt, das auf der anderen Seite an der Platte (114) angeschweißt ist; zwischen den Seiten (112 und 113) und der Schubplatte (114) ist ein Ölreservoir (115) an dem Zubehörteil (115a) angebracht; die Kolbenstange (2a) des Hydraulikzylinders (2) ist in den Buchsen (112a und 113a) gelagert; unter dem Zubehör (115a) und den Buchsen (112a und 113a) erstreckt sich ein Einlassrohr (116) und ein Ventil (117) mit einem Hebel (117a) und einem Rad (117b) aus dem Reservoir (115); ein Einlassrohr (119) ist am Ventil (17) angeschlossen, wobei das Rohr am Eingang eines T-Stücks (118) befestigt ist; am Ausgang des T-Stücks (118) sind zwei Rohre (120) angeschlossen, die mit Düsen (121) zusammenwirken, die auf der linken und auf der rechten Seite der oberen Platte des Bodens (11) angeordnet sind.

4. Holzspalter mit einem Mechanismus zur automatischen Schmierung von Führungen nach einem der vorhergehenden Ansprüche, **dadurch gekennzeichnet, dass** der Hebel (117a) eine vorgespannte Feder aufweist.

5. Holzspalter mit einem Mechanismus zur automatischen Schmierung von Führungen nach einem der vorhergehenden Ansprüche, **dadurch gekennzeichnet, dass** in dem Hebel (117a) ein frei drehbares Rad (177b) eingebaut ist.

6. Holzspalter mit einem Mechanismus zur automatischen Schmierung von Führungen nach einem der vorhergehenden Ansprüche, **dadurch gekennzeichnet, dass** sich bei eingeschaltetem Betrieb, die Kolbenstange (2a) zusammen mit dem Schubkopf (1) entlang der Führungen (3) bewegt und sich von einer Schrägscheibe (2b) auf dem Hydraulikzylinder (2) weg bewegt und folglich das Rad (117b) des Hebels (117a) auf der Platte (2b) gleitet, sich in eine neue Position versetzt und das Ventil (117) öffnet, so dass Öl von den Schmierdüsen auf die Führungen (3) fließt; dass der Hebel (117a) in dieser Position verbleibt bis das Rad (177b) des Hebels (117a) die Platte (2b) erreicht, auf dieser gleitet und in dieser Position verbleibt, was zum Schließen des Ventils (117) führt; dass für jede Spaltung eines Blocks die Bewegung des Schubkopfes (1) wiederholt wird, was die Schmierung der Führungen (3) ermöglicht, wenn sich der Schubkopf (1) von der Ausgangsposition in die Endposition an der Schaufel (4) bewegt und zurück in die Ausgangsposition, wenn sich die Kolbenstange (2a) in dem Zylinder (2) befindet; dass das Ein- bzw. Ausschalten der Schmierung der Führungen (3) von der Position des Schubkopfes (1), des Zylinders (2) mit der Platte (2b) und des Hebels (117a) mit dem Rad (117) abhängt.

7. Holzspalter mit einem Mechanismus zur automatischen Schmierung von Führungen nach einem der vorhergehenden Ansprüche, **dadurch gekennzeichnet, dass** ein Auslassrohr an dem Ventil (117) befestigt ist, wobei das Rohr mit dem Eingang eines Verteilerstücks mit drei oder mehr Auslässen verbunden ist, wobei die Anzahl der Düsen entlang der Querseite der oberen Platte des Bodens (11) der Anzahl der Auslässe des Verteilerstücks entspricht.

8. Holzspalter mit einem Mechanismus zur automatischen Schmierung von Führungen nach einem der vorhergehenden Ansprüche, **dadurch gekennzeichnet, dass** das Auslassrohr des Ventils (117) direkt an die Düse an der oberen Platte des Bodens (11) anschließt.

9. Holzspalter mit einem Mechanismus zur automatischen Schmierung von Führungen nach einem der vorhergehenden Ansprüche, **dadurch gekennzeichnet, dass** er in Vertikalspaltern eingebaut ist, wobei die geometrische Anordnung der einzelnen Funktionselemente am Hydraulikzylinder und dem Ventil mit dem Hebel derart eingestellt wird, dass das Ein- und Ausschalten funktioniert.

## Revendications

1. Une fendeuse à bois dotée d'un mécanisme de lubrification automatique de guides, la fendeuse à bois comprenant un entraînement électro-hydraulique, une tête de poussée (1), un vérin hydraulique (2), des guides (3), une lame (4), un dispositif d'alimentation (5), une table de rangement (6) et un pupitre de commande (7), **caractérisée en ce que** la présence ou l'absence de lubrification dépend de la position d'un piston du vérin hydraulique (2) avec une plaque inclinée (2b) et un levier (117a) avec une roue (117b) qui fait passer une soupape d'huile (117) de l'état fermé à l'état ouvert.

2. Fendeuse à bois dotée d'un mécanisme de lubrification automatique de guides selon la revendication 1, **caractérisée en ce qu'**un réservoir (115) d'huile de lubrification et une vanne (117) commandée par un levier (117a) sont installés sur la tête de poussée (1), la soupape s'enclenchant lorsque la tête de poussée commence à se déplacer de sa position de départ et la soupape se déclenchant lorsque la tête de poussée revient à sa position de départ ; que le levier dans la position de départ de la tête de poussée ancre une plaque inclinée (2b) sur le côté inférieur du vérin hydraulique (2) et maintient la soupape en position fermée ; que, lorsque la fendeuse à bois est en cours d'utilisation, la tige de piston (2a), conjointement avec la tête de poussée, s'éloigne de la plaque inclinée sous le vérin hydraulique et le levier se soulève, qui conduit par conséquent à l'ouverture de la soupape à huile, qui coule ensuite librement du réservoir vers deux buses de lubrification et de l'huile goutte sur la surface des guides.

3. Fendeuse à bois dotée d'un mécanisme de lubrification automatique de guides selon la revendication 2, **caractérisée en ce que** la tête de poussée (1) est installée sur les guides (3) par l'intermédiaire d'une base horizontale (11), qui est maintenue à partir du côté inférieur par des pièces (11a) et (11b) ; que les éléments de guidage (3) sont réalisés sous la forme d'un profilé en T ; que les côtés latéraux (112) et (113) sont soudés perpendiculairement à la base (11), les côtés étant également soudés à une plaque de poussée de forme circulaire (114) ; des douilles sont soudées sur les côtés (112 et 113) en parallèle avec la base (11) ; la base (11) présente des ouvertures à la place de buses de lubrification (121), de sorte que l'huile puisse s'écouler sur les guides (3) ; les douilles (112a et 113 a) sont soudées à un accessoire (115a), qui est soudé de l'autre côté sur la plaque (114) ; un réservoir d'huile (115) est monté sur l'accessoire (115a) entre les côtés (112 et 113) et la plaque de poussée (114) ; la tige de piston (2a) du vérin hydraulique (2) est montée dans les douilles (112a et 113a); sous l'accessoire (115a) et les douilles (112a et 113a), un tube d'entrée (116) et une soupape (117) avec un levier (117a) et une roue (117b) s'étendent à partir du réservoir (115) ; un tube d'entrée (119) est relié à la soupape (117), le tube étant fixé à l'entrée d'une pièce en forme de T (118) ; à la sortie de la pièce en forme de T (118), deux tubes (120) sont reliés, qui sont fixés conjointement avec des buses (121) dans un trou sur le côté gauche et sur le côté droit de la plaque supérieure de la base (11).

4. Fendeuse à bois dotée d'un mécanisme de lubrification automatique de guides selon l'une quelconque des revendications précédentes, **caractérisée en ce que** le levier (117a) présente un ressort précontraint.

5. Fendeuse à bois dotée d'un mécanisme de lubrification automatique de guides selon l'une quelconque des revendications précédentes, **caractérisée en ce qu'**une roue tournant librement (177b) est installée dans le levier (117a).

6. Fendeuse à bois dotée d'un mécanisme de lubrification automatique de guides selon l'une quelconque des revendications précédentes, **caractérisée en ce que,** lorsque le fonctionnement est activé, la tige de piston (2a) conjointement avec la tête de poussée (1) se déplace le long des guides (3) et s'éloigne d'une plaque inclinée (2b) sur le vérin hydraulique (2) et par conséquent la roue (117b) du levier (117a) glisse sur la plaque (2b), s'établit dans une nouvelle position et ouvre la soupape (117) de sorte que l'huile s'écoule depuis les buses de lubrification sur les guides (3) ; que le levier (117a) reste dans ladite position jusqu'à ce que la roue (177b) du levier (117a) atteigne la plaque (2b), glisse sur celui-ci et reste dans cette position, ce qui conduit à la fermeture de la soupape (117) ; que pour chaque fente de bois, le mouvement de la tête de poussée (1) est répété, ce qui permet la lubrification des guides (3), lorsque la tête de poussée (1) se déplace de la position de départ à la position finale au niveau de la lame (4) et revient à la position de départ, lorsque la tige de piston (2a) est dans le vérin (2) ; que l'activation ou la désactivation de la lubrification des guides dépend de la position de la tête de poussée (1), du vérin (2) avec la plaque (2b) et du levier (117a) avec la roue (117).

7. Fendeuse à bois dotée d'un mécanisme de lubrification automatique de guides selon l'une quelconque des revendications précédentes, **caractérisée en ce qu'**un tube de sortie est fixé à la soupape (117), le tube étant relié à l'entrée d'une pièce de distribution avec trois sorties ou plus, le nombre de buses le long du côté transversal de la plaque supérieure de la base (11) étant égal au nombre de sorties de la pièce de distribution.

8. Fendeuse à bois dotée d'un mécanisme de lubrification automatique de guides selon l'une quelconque des revendications précédentes, **caractérisée en ce que** le tube de sortie de la soupape (117) est directement relié à la buse sur la plaque supérieure de la base (11).

9. Fendeuse à bois dotée d'un mécanisme de lubrification automatique de guides selon l'une quelconque des revendications précédentes, **caractérisée en ce qu'**elle est installée dans des fendeuses verticales, le placement géométrique d'éléments fonctionnels individuels sur le vérin hydraulique et la soupape avec le levier étant réglé de telle sorte que l'activation et la désactivation fonctionnent.
